Europäisches Patentamt

European Patent Office

Office européen des brevets

(11) Numéro de publication: **0 106 710**
**B1**

(12) **FASCICULE DE BREVET EUROPEEN**

(45) Date de publication du fascicule du brevet: **18.05.88**

(21) Numéro de dépôt: **83401333.6**

(22) Date de dépôt: **28.06.83**

(51) Int. Cl.⁴: **H 04 Q 3/52, H 04 B 9/00**

(54) **Dispositif de commutation optique.**

(30) Priorité: **02.07.82 FR 8211654**

(43) Date de publication de la demande:
**25.04.84 Bulletin 84/17**

(45) Mention de la délivrance du brevet:
**18.05.88 Bulletin 88/20**

(84) Etats contractants désignés:
**BE DE GB IT NL**

(56) Documents cités:
**WO-A-80/01028**
**US-A-4 074 142**

**PATENTS ABSTRACTS OF JAPAN, vol. 4, no.
184, 18 décembre 1980, page 166 P-41, Tokyo,
JP & JP-A-55129301**

**ELECTRONICS LETTERS, vol. 18, no. 11, 27 mai
1982, pages 447-448, Londres, GB E.G.
RAWSON et al.: "Fused conically tapered
fibre-optical power divider"**

(73) Titulaire: **THOMSON-CSF TELEPHONE
146, Boulevard de Valmy
F-92707 Colombes (FR)**

(72) Inventeur: **Huignard, Jean-Pierre
THOMSON-CSF SCPI 173, bld Haussamnn
F-75379 Paris Cedex 08 (FR)**
Inventeur: **Jeunhomme, Luc
THOMSON-CSF SCPI 173, bld Haussamnn
F-75379 Paris Cedex 08 (FR)**
Inventeur: **d'Auria, Luigi
THOMSON-CSF SCPI 173, bld Haussamnn
F-75379 Paris Cedex 08 (FR)**

(74) Mandataire: **Weinmiller, Jürgen et al
Lennéstrasse 9 Postfach 24
D-8133 Feldafing (DE)**

## Description

La présente invention se rapporte aux dispositifs de commutation optique, qui permettent de raccorder des sources lumineuses à des récepteurs de lumière selon des configurations modifiables à volonté. Un tel dispositif est notamment utilisable pour réaliser la commutation entre des circuits téléphoniques.

Des dispositifs qui permettent de réaliser une telle commutation sont connus et peuvent fonctionner selon des principes divers. C'est ainsi que l'on sait recueillir un faisceau lumineux collimaté provenant d'une source et le défléchir à volonté vers un circuit récepteur quelconque à l'aide d'un miroir tournant, actionné par un moteur pas à pas par exemple. Dans ce cas les avantages de rapidité et d'insensibilité aux perturbations, apportés par l'usage d'un faisceau lumineux, sont largement perdus en raison de l'utilisation d'un dispositif mécanique, qui fonctionne relativement lentement et peut être perturbé par toutes les vibrations extérieures.

On a également proposé de défléchir le faisceau lumineux à l'aide de divers dispositifs optoélectriques, tels que par exemple des réseaux de diffraction induits par un champ magnétique dans une couche sensible à ce champ. Malheureusement le rendement lumineux de ces déviateurs est faible, et si on peut éventuellement envisager d'en utiliser un tout seul, il est exclu d'en mettre plusieurs en série sans procéder à une régénération du signal, qui ruine l'économie du système.

On connaît par le document Patent Abstracts of Japan—Vol. 4 numéro 184, 18.12.1980, page 166 p-41 une matrice de commutation 8×8 comprenant huit distributeurs et huit organes de sélection, chaque distributeur étant couplé en entrée à une fibre optique et en sortie à chacun des organes de sélection par huit fibres optiques, chaque organe de sélection ayant une sortie et recevant sélectivement un signal parmi huit.

On connaît également par le document WO—A—8.001 028 un dispositif de commutation comportant des guides de lumière constituant des liaisons entrantes, des guides de lumière constituant des liaisons sortantes, et des organes récepteurs dont la sortie est reliée à une liaison sortante. Chaque organe récepteur comporte des guides de lumière dont les faces d'extrémité sont optiquement conjuguées avec les liaisons entrantes qui constituent chacune une source lumineuse. Dans un organe récepteur chaque guide de lumière est connecté à un second guide de lumière par un interrupteur optique et les seconds guides de lumière sont connectés en parallèle à un coupleur optique dont la sortie est reliée à la liaison sortante par un amplificateur de lumière.

On connaît par le document US—A—4 074 142 un commutateur optique comportant m sources lumineuses, m ensembles de n fibres optiques chacune et n circuits de sortie, chaque circuit de sortie recevant un faisceau lumineux de chaque ensemble de fibres et comportant à cet effet m récepteurs photosensibles et m portes pour ne transmettre qu'un signal parmi les m signaux délivrés par les récepteurs photosensibles.

L'invention propose de réduire le nombre de récepteurs photosensibles de chaque circuit de sortie et par la même de simplifier le circuit de sortie.

Selon l'invention, un dispositif de commutation optique du type comportant m sources lumineuses, n récepteurs photosensibles, m ensembles de n fibres optiques chacun couplés d'un côté à une source lumineuse, chaque fibre optique émettant un faisceau lumineux, des obturateurs placés chacun sur le trajet d'un faisceau lumineux et s'ouvrant sous la commande de signaux de commutation en faissant passer ce faisceau, est caractérisé par le fait que chaque récepteur photosensible est couplé à une fibre optique de chacun des m ensembles de fibres optiques.

D'autres particularités et avantages de l'invention apparaîtront clairement dans la description suivante présentée à titre d'exemple non limitatif et faites en regard des figures annexées qui représentent:

la figure 1, le schéma partiel d'un commutateur à une entrée et n sorties;

la figure 2, le schéma du couplage entre la source 101 et le faisceau 102 du dispositif de la figure 1;

la figure 3, le schéma partiel d'un commutateur à quatre entrées et n sorties, selon l'invention;

la figure 4, le schéma d'une variante du dispositif de sortie du commutateur de la figure 3.

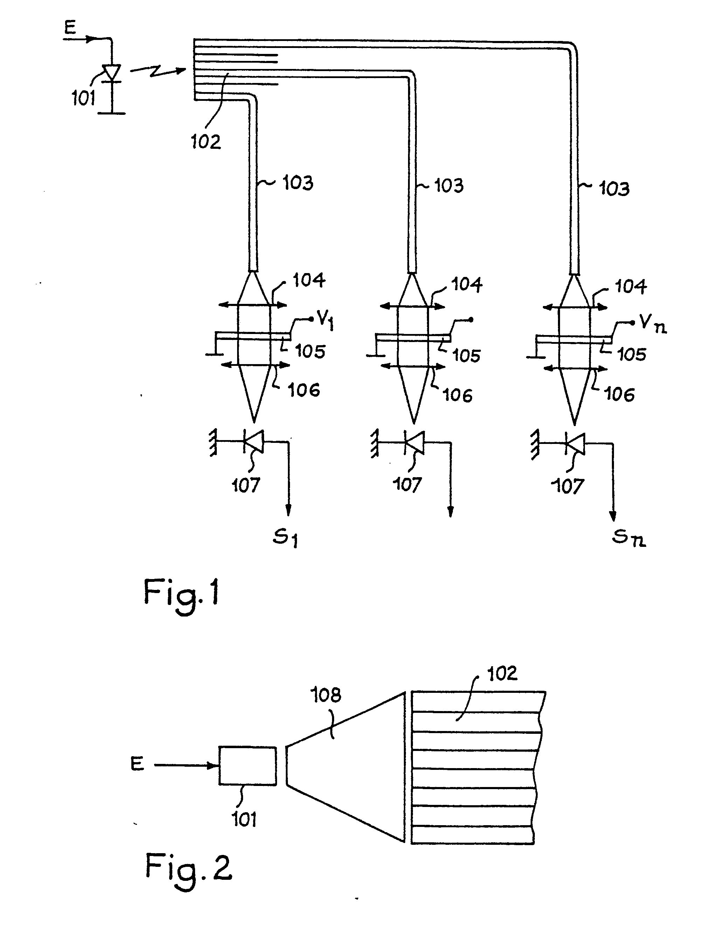

On a représenté sur la figure 1 un dispositif de commutation simple permettant d'ètablir à la liaison entre une source unique et un ensemble de n récepteurs. Ce dispositif pourrait par exemple jouer le rôle d'un commutateur rotatif tel qu'il existait dans les anciens centraux téléphoniques.

Pour la facilité de l'explication et du dessin, les sources et les récepteurs sont ici des dispositifs électro-optiques recevant et émettant des signaux électriques. Ainsi seule l'opération de commutation est optique, et on ne dispose pas de la possibilité d'associer ces dispositifs pour réaliser un système entièrement optique. Le dispositif est néanmoins intéressant car il est pratiquement insensible à la vitesse et au type de modulation, et permet de réaliser des dispositifs pouvant commuter des voies dont la rapidité est de plusieurs centaines de MHz.

Il est bien clair qu'une source électro-optique telle qu'une diode électroluminescente peut être remplacée par l'extrémité d'une fibre optique; et qu'inversement un récepteur électro-optique tel qu'une photodiode peut être remplacé par l'extrémité d'une autre fibre optique. On disposera alors dans ce cas d'un dispositif réalisant la commutation directe des faisceaux lumineux qui pourra avantageusement être associé à d'autres dispositifs similaires pour réaliser un système de plus grande capacité, permettant par exemple de raccorder entre eux des abonnés munis d'un poste téléphonique lui-même relié au standard par une fibre optique.

Dans le dispositif de la figure 1 une source lumineuse 101 est alimentée par un signal modulé E. Cette source peut être une diode électroluminescente ou un laser à semiconducteur.

Le signal émis par la source 101 est focalisé sur l'extrémité d'un faisceau de fibres 102, qui reçoivent chacune des fractions sensiblement égales du signal lumineux émis. Ces signaux lumineux se propagent donc dans les n fibres 103 du faisceau de fibres. Ils émergent à l'autre extrémité des fibres avec une divergence qui dépend de l'ouverture numérique de celles-ci et sont alors recueillis par des lentilles de collimation 104 qui délivrent des faisceaux sensiblement parallèles. Ces faisceaux passent à travers des obturateurs 105. Ces obturateurs sont commandés par un ensemble de signaux V1 à Vn affectés chacun à l'une des liaisons à établir.

Si un obturateur 105 est ouvert, le faisceau le traverse et est repris par une lentille de focalisation 106 qui le concentre sur une cellule photodétectrice 107. Cette cellule délivre un signal de sortie S qui est le même, à l'affaiblissement du dispositif prêt, que le signal d'entrée E.

Ainsi, selon que les obturateurs 105 sont ouverts ou fermés sous la commande des signaux V1 à Vn, on recueillera un ou des signaux de sortie S1 à Sn sur les sorties du dispositif.

On remarque en particulier que, si ce dispositif permet de réaliser une connexion simple entre l'entrée et une sortie, correspondant par exemple à la liaison entre un abonné demandeur et un abonné demandé, il permet également de réaliser une diffusion du signal d'entrée E sur un nombre quelconque des sorties, réalisant ainsi la fonction de diffusion de messages telle que par exemple celle nécessaire pour l'horloge parlante.

La source 101 peut être une diode laser dont la brillance est telle qu'on peut coupler la quasi totalité du signal lumineux qu'elle émet au faisceau de fibres 102 à l'aide d'une simple lentille.

Dans le cas d'une diode électroluminescente, la surface émissive est plus grande, ainsi d'ailleurs que dans le cas où la source est l'extrémité d'une fibre optique. De plus dans le cas de la diode électroluminescente le diagramme d'émission est Lambertien. On aura alors intérêt, pour coupler une telle diode luminescente au faisceau de fibres, à utiliser un dispositif d'adaptation tel que celui représenté sur la figure 2. Ce dispositif comprend une grosse fibre optique conique 108, dont l'extrémité la plus petite est couplée avec la face émettrice de la diode 101, et dont l'extrémité la plus grande est couplée avec l'entrée du faisceau 102. Ceci permet de recueillir un maximum de lumière en sortie de la diode, et d'émettre un maximum de lumière dans le faisceau de fibres.

On peut ainsi dans tous les cas émettre au moins plusieurs milliwatts optiques dans l'ensemble des fibres.

Le dispositif étant de dimension limitée, les fibres du faisceau sont courtes, et les pertes en transmission, ainsi que la dispersion, sont négligeables quelle que soit la qualité de ces fibres parmi celles disponibles actuellement. On peut donc sélectionner celles-ci en fonction d'autres critères, tels que par exemple une ouverture numérique élevée qui permet un couplage optique plus facile avec la source.

De même on utilise de préférence des fibres optiques dont le coeur est relativement large par rapport à la gaine et a par exemple un diamètre de 100 à 200 microns. En effet comme ces fibres sont regroupées en faisceau, l'énergie lumineuse qui arrive de la source est appliquée aussi bien sur le coeur que sur la gaine, et la partie appliquée sur la gaine, ainsi qu'entre les intervalles des fibres, est perdue. On peut d'ailleurs utiliser des techniques d'attaque chimique connues, qui permettent de diminuer l'épaisseur de la gaine et donc d'augmenter le rendement de couplage. On peut ainsi obtenir entre l'émetteur 101 et la sortie de l'une des fibres 103 des pertes de l'ordre de 2 dB, et le débit d'informations n'est limité que par les possibilités de modulation de la source, c'est-à-dire dans le cas d'une diode électroluminescente de l'ordre de plusieurs dizaines de Mbits par seconde, et dans le cas d'une diode laser de l'ordre de plusieurs centaines de Mbits par seconde.

Les lentilles 104 et 106 sont des éléments de type tout à fait courant dans la technique des fibres optiques. Compte tenu des dimensions relativement importantes de la surface de détection des détecteurs habituellement utilisés, tels que par exemple les photodiodes, il n'y a pas de problème particulier de perte dû à ces lentilles, puisque même si la plage de focalisation est grande, on peut récupérer la quasi totalité de la lumière émise par le fibre.

L'obturateur 103 peut être réalisé selon différentes techniques connues.

On peut en particulier utiliser des matériaux électro-optiques tels que les céramiques du type PLZT, ou des cristaux liquides. Toutefois ces matériaux électro-optiques nécessitent généralement l'utilisation de polariseurs croisés, qui entraînent par eux-mêmes une perte d'énergie lorsque l'obturateur est ouvert.

Pour n'avoir aucune perte due à cette obturateur, on peut utiliser un système optomécanique, c'est-à-dire par exemple un volet mû par un électro-aimant. Si le rendement est alors parfait, la vitesse est faible, et les probabilités de panne mécanique sont importantes par rapport à un dispositif statique.

Une autre solution consiste alors à utiliser d'autres matériaux s'obscurcissant sous l'effet d'un signal électrique, tel que les matériaux électrochrome, un électrolytiques. Les pertes sont plus faibles que dans le cas des matériaux électro-optiqués, mais ne sont pas nulles comme dans le cas d'un obturateur mécanique.

Pour le détecteur 107, la solution la plus simple consiste à utiliser une photodiode, qui sera choisie du type PIN ou à avalanche selon le compromis classique entre le courant d'obscurité et la sensibilité désirés.

On peut à titre d'exemple donner un bilan énergétique dans le cas où le nombre n de fibres par faisceau est de dix, et la puissance optique effectivement couplée dans le faisceau est de 0 dBm. La puissance couplée dans une seule fibre sera donc de—10 dBm et la puissance reçue par un détecteur, compte tenu des pertes diverses de l'ordre de—15 dBm. On sait par ailleurs qu'une puissance optique inférieure à 1 mW, c-est-à-dire—30 dBm, permet d'obtenir un taux d'erreur de $10^{-9}$ avec un débit de 100 Mbits par seconde. On pourra donc obtenir ce taux d'erreur à ce débit, correspondant à des spécifications courantes, en disposant d'une marge de 15 dB. Cette marge peut être utilisée de différentes façons, et servir par exemple à compenser le fait que les modulateurs très rapides à matériaux électro-optiques n'ont pas un taux d'extinction nul, ce qui augmente le rapport signal à bruit, et donc le taux d'erreur obtenu.

Dans le cas où l'on utilise un obturateur mécanique, dont le taux d'extinction peut être nul, on pourra alors augmenter le nombre de directions du commutateur.

On peut extrapoler ce dispositif pour réaliser un dispositif, selon l'invention permettant cette fois ci la commutation de m circuits entrants sur n circuits sortants. En reprenant la comparaison utilisée pour le dispositif précédemment décrit, ce dispositif pourra jouer le même rôle qu'un commutateur à barres croisées utilisé dans les modèles les plus récents des standards téléphoniques électromécaniques.

Pour cela on utilise m faisceaux de fibres, semblables à celui de la figure 1 et excités chacun par une source distincte. Les n fibres de chaque faisceau excitent n circuits de sortie distincts, donnant les signaux S1 à Sn. Un dispositif optique particulieur permet d'associer les fibres des faisceaux distincts par groupes de m fibres appartenant chacune à un faisceau séparé, de manière à exciter par chaque groupe l'un des récepteurs donnant un signal de sortie S.

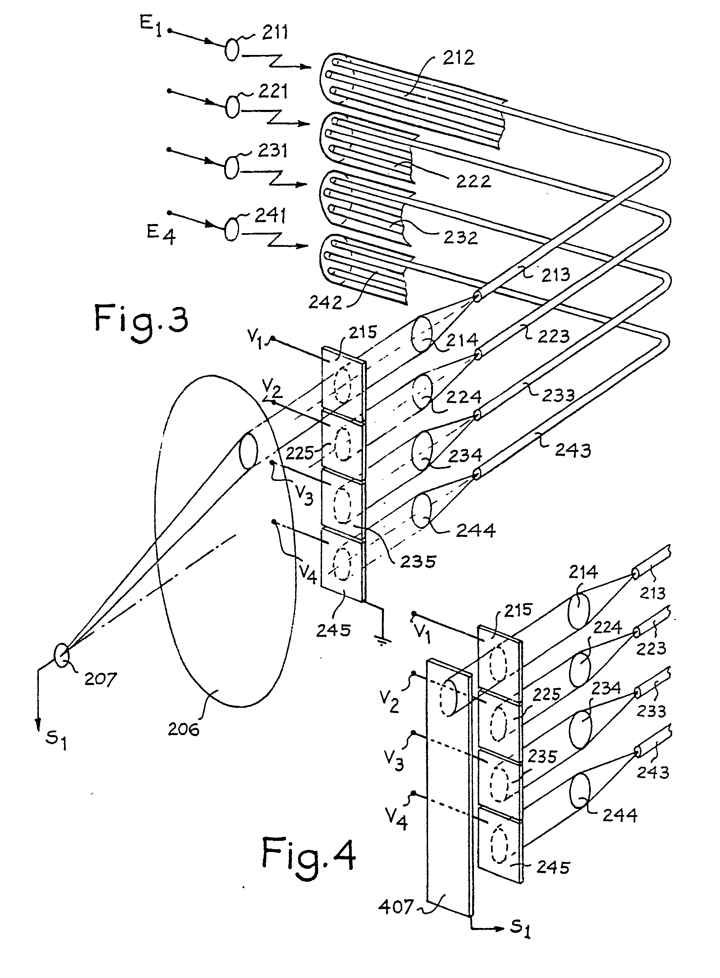

On a représenté sur la figure 3 un schéma simplifié d'un tel dispositif de commutation m×n, dans lequel le nombre m de faisceaux est limité à quatre et seul l'un des groupes de sortie, le premier en l'occurence, est représenté, pour ne pas surcharger la figure. Les n−1 autres groupes de sorties sont identiques à celui qui est représenté.

Les signaux d'entrée E1 à E4 attaquent quatre sources 211, 221, 231 et 241. Ces sources illuminent respectivement les faces d'entrée de quatre faisceaux 212, 222, 232 et 242 comportant chacune n fibres. Quatre fibres 213, 223, 233 et 243 appartenant respectivement à chacun des quatre faisceaux sont regroupés les faisceaux de sortie qu'elles délivrent sont collimatés par respectivement quatre lentilles 214, 224, 234 et 244. Les axes des fibres et des lentilles de collimation sont alignés, de manière à ce que les faisceaux collimatés soient parallèles entre eux et le plus proche possible les uns des autres.

Quatre obturateurs 215, 225, 235 et 245 sont regroupés dans un même plan pour intercepter les faisceaux collimatés. Les dimensions de ces obturateurs sont réduites au minimum et ils sont groupés de manière à former une figure la plus compacte possible. C'est cet arrangement qui détermine la position des fibres et des lentilles de collimation. Dans l'exemple représenté, pour la clarté de la figure les trois obturateurs sont représentés adjacents et alignés l'un au-dessus de l'autre. Dans une réalisation pratique comportant comme sur la figure quatre obturateurs, il y aurait lieu de les regrouper de manière à former un carré.

Chacun de ces obturateurs est commandé par l'un des signaux de commande de V1 à V4.

Lorsque, sous l'action de l'un de ces signaux de commande, un obturateur est ouvert, il laisse passer le faisceau lumineux provenant de la fibre qui lui est associée. En principe, et sauf pour des applications particulières, un seul des obturateurs est ouvert à la fois.

Le faisceau ainsi délivré par l'obturateur ouvert est repris par une grande lentille de concentration 206, qui vient le focaliser sur un récepteur 207, lequel délivre le signal de sortie S1. Il y a bien sûr tout intérêt à diminuer les dimensions de cette lentille, qui doit être cependant suffisamment grande pour collecter tous les faisceaux susceptibles d'être délivrés par les obturateurs. C'est la raison pour laquelle il y a lieu de grouper ces obturateurs, et donc l'ensemble des fibres qui leur sont associées, selon un arrangement le plus compact possible.

Ainsi donc, sous l'action d'un des signaux V1 à V4, on peut établir une liaison entre l'un quelconque des circuits d'entrée E1 à E4 et le circuit de sortie S1. Le dispositif comporte en outre n-1 ensembles identiques à S1 comportant chacun quatre fibres choisies respectivement dans les quatre faisceaux, quatre lentilles de collimation, quatre obturateurs, une lentille de focalisation, et un récepteur, qui délivrent les n-1 autres signaux S2 à Sn de sortie.

Ceci permet donc de commuter l'un quelconque des signaux d'entrée sur l'une quelconque des voies de sortie.

Dans le cas où le récepteur est une cellule photovoltaïque, on peut lui donner des dimensions appropriées pour supprimer la lentille de focalisation 206.

Dans un exemple de réalisation de cette variante, représenté partiellement sur la figure 4, le récepteur 407 est formé d'une barrette photovoltaïque allongée, dont les dimensions sont telles qu'elle intercepte tous les faisceaux parallèles sortant des obturateurs 215, 225, 235 et 245. Ceci ne présente pas de difficulté puisqu'on sait faire des cellules photovoltaïques de dimensions tout à fait variables.

**Revendications**

1. Dispositif de commutation optique du type comportant m sources lumineuses (211, 221, 231, 241), n récepteurs photosensibles (207; 407), m ensembles de n fibres optiques (212, 222, 232, 242) chacun couplés d'un côté à une source lumineuse, chaque fibre optique (213, 223, 233, 243), emettant un faisceau lumineux, des obturateurs (215, 225, 235, 245) placés chacun sur le trajet d'un faisceau lumineux et s'ouvrant sous la commande de signaux de commutation (V$_1$, V$_2$, V$_3$, V$_4$) en laissant passer ce faisceau, caractérisé par le fait que chaque récepteur photosensible (207; 407) est couplé à une fibre optique (213, 223, 233, 243) de chacun des m ensembles de fibres optiques (212, 222, 232, 242).

2. Dispositif de commutation selon la revendication 1, caractérisé en ce qu'il comprend n lentilles de focalisation (206) pour focaliser sur chaque récepteur photosensible (207) m faisceaux lumineux issus chacun d'un ensemble de fibres distinct (213, 223, 233, 243).

3. Dispositif de commutation selon la revendication 1, caractérisé par le fait que les récepteurs photosensibles (407) sont des cellules photovoltaïques étendues pour recueillir les faisceaux lumineux sans utiliser de lentille de focalisation.

## Patentansprüche

1. Optische Schalteinrichtung mit m Lichtquellen (211, 221, 231, 241), n lichtempfindlichen Empfängern (207, 407) und m Gruppen von n optischen Fasern (212, 222, 232, 242), wobei jede an einem Ende mit einer Lichtquelle gekoppelt ist, jede optische Faser (213, 223, 233, 243) einen Lichtstrahl aussendet, und jeweils eine Blende (215, 225, 235, 245) im Strahlenweg plaziert ist, die von Schaltsignalen (V1, V2, V3, V4) gesteuert werden, um diesen Strahl durchzulassen, dadurch gekennzeichnet, daß jeder lichtempfindliche Empfänger (207, 407) an eine optische Faser (213, 223, 233, 243) jeder der m optischen Fasergruppen (212, 222, 232, 242) angeschlossen ist.

2. Optische Schalteinrichtung nach Anspruch 1, dadurch gekennzeichnet, daß sie n Fokussierungslinsen (206) zur Fokussierung der m von jeder der verschiedenen Lichtfasergruppen (213, 223, 233, 243) ausgesandten Lichtstrahlen aufweist.

3. Optische Schalteinrichtung nach Anspruch 1, dadurch gekennzeichnet, daß die lichtempfindlichen Empfänger (407) als ausgedehnte Fotozellen zum Empfang der Lichtstrahlen ohne Fokussierungslinsen ausgebildet sind.

## Claims

1. An optical switching device of the type comprising *m* light sources (211, 221, 231, 241), *n* photosensitive receivers (207; 407), *m* sets of *n* optical fibres (212, 222, 232, 242) each coupled at one end to a light source, each optical fiber (213, 223, 233, 243) emitting a light beam, shutters (215, 225, 235, 245) each placed on the path of a light beam and opening under the control of switching signals (V1, V2, V3, V4) to allow said beam to pass, characterized by the fact that each photosensitive receiver (207; 407) is coupled to one optical fiber (213, 223, 233, 243) of each of the *m* sets of optical fibers (212, 222, 232, 242).

2. A switching device according to Claim 1, characterized in that it includes *n* focusing lenses (206) for focusing *m* light beams each coming from a different set of fibers (213, 223, 233, 243) on each photosensitive receiver (207).

3. A switching device according to claim 1, characterized by the fact that the photosensitive receivers (407) are photovoltaic cells which are extended to receive the light beams without using a focusing lens.

Fig.1

Fig.2

1

Fig.3

Fig.4